# FASCICULE DE BREVET EUROPEEN

(11) **EP 3 028 924 B1**
(45) Date de publication et mention de la délivrance du brevet: **05.11.2025**
(21) Numéro de dépôt: 15197264.3
(22) Date de dépôt: 01.12.2015
(51) Int. Cl.: B62B 5/00, B62B 5/02

(54) **CHARIOT TIRÉ PAR UN PIÉTON POUR PASSER DES MARCHES**
VON EINEM FUSSGÄNGER GEZOGENER WAGEN ZUM PASSIEREN VON STUFEN
CARRIAGE PULLED BY A PEDESTRIAN FOR PASSING STEPS

(30) Priorité: 02.12.2014 FR 1461766
(43) Date de publication de la demande: 08.06.2016
(73) Titulaire: Collibault, Joseph, 1050 Uccle (BE)
(72) Inventeur: Collibault, Joseph, 1050 Uccle (BE)
(74) Mandataire: Herrburger, Pierre

(56) Documents cités:
- GB-A- 1 524 390
- US-A- 4 130 291
- US-A- 6 155 362
- US-A1- 2004 094 378
- US-B1- 8 439 371
- US-B1- 8 556 280

## Description

### Domaine de l'invention

La présente invention a pour objet un chariot pour recevoir une charge (valise) et être tiré par un piéton pour notamment passer des marches, comprenant un châssis debout, terminé en partie haute par une poignée et en partie basse, par une paire de roues et un plateau recevant la charge pour rouler sur une surface plane.

### Etat de la technique

Il existe différents chariots repliables, démontables ou intégrés à des charges. Ainsi, il existe des diables formés d'un brancard avec un support muni d'une paire de roues pour recevoir une charge et être tiré par un piéton.

Il existe de tels équipements qui se fixent aux valises pour faciliter leur transport sur des surfaces planes ou encore des valises équipées de roulettes et que l'on tire sur les surfaces planes.

Mais tous ces équipements ont l'inconvénient de ne pas permettre le passage de marches. Il existe certes des diables pour charges lourdes équipés d'une paire de triples roues pivotantes, solidairement les unes des autres de façon à pouvoir grimper les marches. Mais un tel équipement, pratique pour son utilisation en tant que diable, est difficilement utilisable pour des charges plus usuelles telles que des valises en remplacement des roulettes car cet équipement serait inutilement trop encombrant pour une valise.

Or, les valises à roulettes ne passent que difficilement les marches, notamment si les nez de marche sont en saillie car les roulettes ne peuvent que difficilement suivre le profil des marches et s'accrochent sous le nez ou au nez de marche qui ne sont pas saillants. Les roulettes disposées sur les valises pour rouler lorsque la valise est tirée en position légèrement inclinée, ne facilitent pas non plus le passage de marches, par exemple dans les réseaux de transports en commun tels que les escaliers dans les stations de métro ou dans les gares ou autres lieux publics non systématiquement équipés d'escalators.

Des dispositifs permettant de faciliter la montée d'escalier avec une charge sont décrits dans les documents suivants.

Le document US-B-8439371 décrit un diable transformé imparfaitement en un véhicule à chenilles pour le passage de marches comme cela est représenté dans la figure 6 de ce document.

Or tant pour la montée ou la descente de plusieurs marches que pour le passage d'un dénivelé, la chenille et les roues gardent leur fonction propre :
- les roues ne roulent pas sur les marches
- la chenille ne sert pas à circuler sur le sol ou le dessus des marches.

Le passage des marches est difficile car les nez s'enfoncent dans la chenille entre les rouleaux aux deux extrémités de la chenille.

Pour le passage d'un dénivelé, on ne peut pratiquement pas utiliser les deux fonctions disjointes des roues et de la chenille.

Le document US 6 155 362 présente un dispositif de type « diable » équipé d'une chenille montée sur des rouleaux. Cette chenille est placée à l'arrière des bras de ce diable et dans leurs parties supérieures. Cette chenille est motorisée.

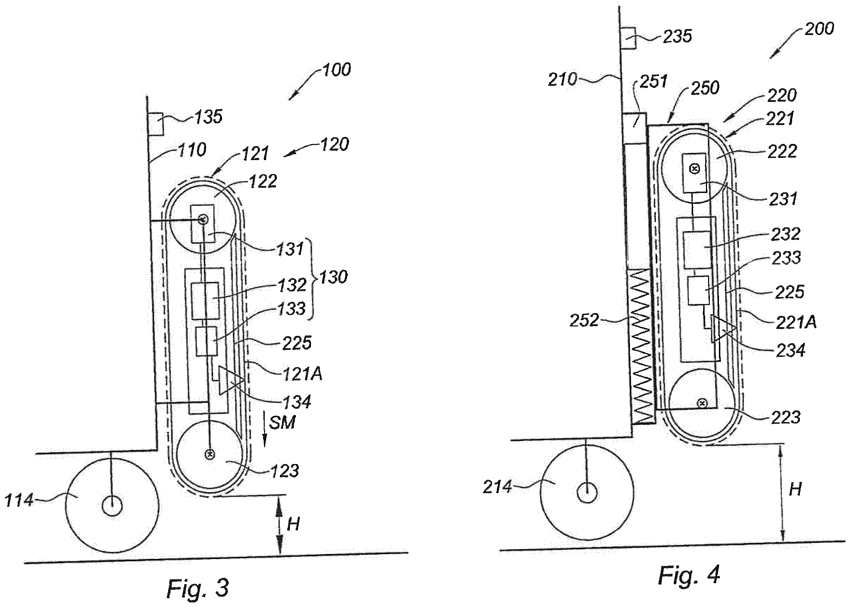

Toutefois, comme le montre la figure 4, le dispositif nécessite que la chenille repose sur le nez d'au moins trois marches. De plus, les roues du diable viennent en contact avec le nez des marches, ce qui occasionne des chocs ou une discontinuité dans le mouvement de montée. En outre, arrivé au sommet de l'escalier, le diable n'est plus entraîné par la chenille et l'utilisateur doit exercer une traction sur le diable pour passer le nez de la dernière marche. Il semble également, que la position de l'utilisateur soit très inconfortable, les poignées du diable étant au ras des marches.

Le document GB 1 524 390 décrit également un diable motorisé équipé d'une chenille motrice, longitudinale, placée entre deux patins. Les roues du diable sont en aval de la partie inférieure de la chenille, ce qui provoque un choc au passage de chaque nez de marche. De plus, il est impossible de faire circuler le diable à l'aide de sa chenille sur la partie horizontale des marches. Il est nécessaire de faire reposer le dispositif d'entraînement sur le nez d'au moins trois marches. Le passage du nez de la dernière marche nécessite une traction de la part de l'utilisateur, ce qui est également le cas dans une moindre mesure pour le passage du nez de chaque marche, la roue non entraînée venant en contact avec le nez de chaque marche.

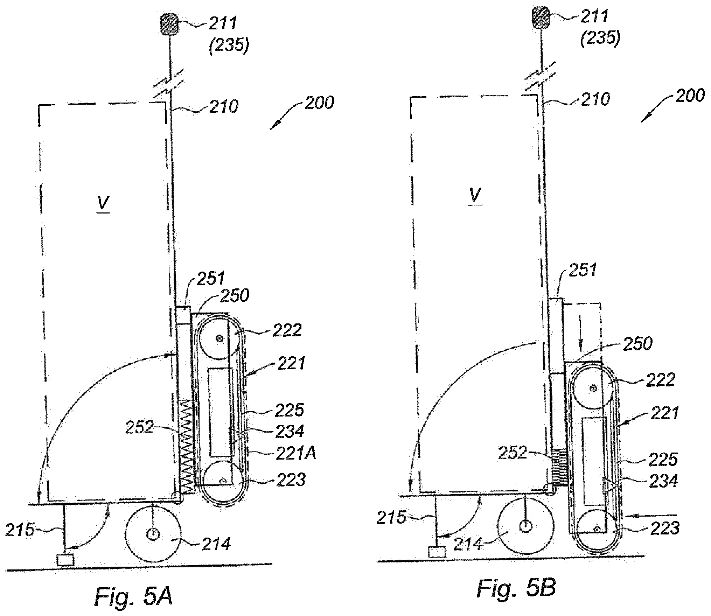

On connaît d'après le document EP 1 783 027, un diable équipé d'une chenille déployable. Cette chenille ne permet pas non plus un passage en continu du nez de la marche, celui-ci s'introduisant dans l'intervalle entre la chenille et la roue (figure 5). Il faut exercer une traction pour que la roue passe le nez de la marche. Il est impossible de faire circuler ce diable sur la partie horizontale de la marche par l'intermédiaire de cette chenille, la partie inférieure de celle-ci se trouvant au-dessus des roues du diable.

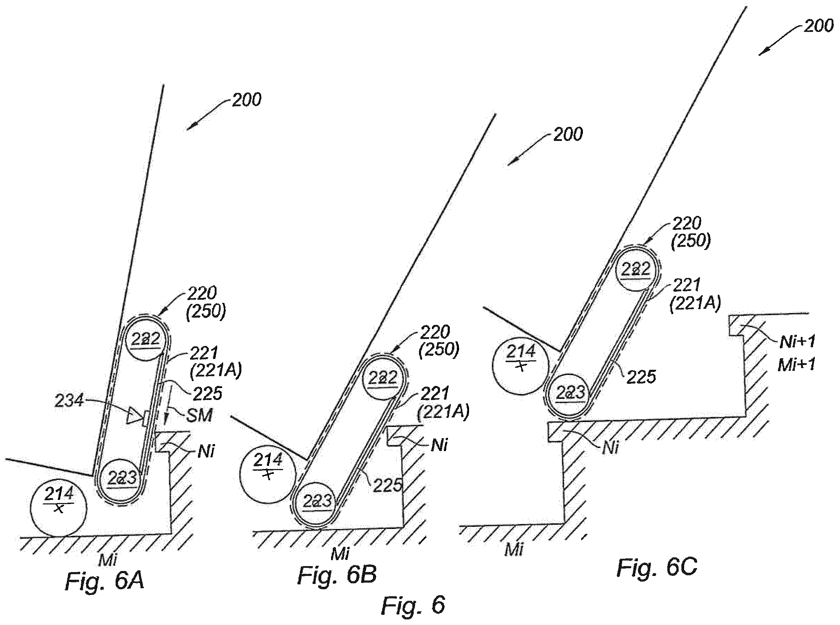

Il existe également des valises équipées de chenille facilitant la montée d'escalier. Une telle valise est décrite notamment dans le document US 2004/0094378 montrant deux dispositifs de chenille encastrés dans la face arrière de la valise. Ces chenilles glissent sur le nez des marches. Comme le montre les figures 5 et 6 lors du passage du nez de la marche inférieure par la chenille, le nez de la marche vient buter contre le dos de la valise ou l'espace entre la chenille et la roue de la valise. Cela occasionne des chocs et nécessite une traction supplémentaire de la part de l'utilisateur pour passer le nez de la marche.

### But de l'invention

La présente invention a pour but de développer un chariot pour recevoir une charge telle qu'une valise et pouvoir être tiré par un piéton, non seulement sur une surface plane mais également pour passer facilement et sans heurts des marches, tant dans le sens montant que dans le sens descendant.

### Exposé et avantages de l'invention

A cet effet, selon les termes de la revendication 1,

l'invention a pour objet un chariotpour recevoir une chargeet être tiré par un piéton pour notamment passer des marches, comprenant :
- un châssis debout, terminé en partie haute par une poignée et en partie basse, par une paire de roues et un plateau recevant la charge pour rouler sur une surface plane,
- et au dos du châssis une chenille ayant une surface extérieure non lisse pour s'accrocher à un nez de marche et déplacer par réaction, le châssis avec sa charge pour passer le nez de marche,
- au dos du châssis, il comporte en partie basse, un module élévateur comprenant une chenille passant sur un cylindre supérieur et un cylindre inférieur,
- le module élévateur étant installéen partie basse du châssis, devant la paire de roues et pour
   * ne pas toucher le sol lorsque le châssis est incliné et tiré sur une surface plane,
   * qu'en roulant, le brin avant de la chenille rencontre le nez de marche, et
   * que la chenille passe complètement le nez de la marche, arrive sur le dessus de la marche et avance sur la surface de la marche en appui sur le cylindre inférieur aussi longtemps que sa paire de roues n'est pas en contact avec le nez ou le dessus de la marche.

Le chariot selon l'invention a l'avantage de faciliter le passage de marche en s'appuyant sur les nez de marche par sa chenille. Ce chariot peut recevoir de manière amovible une charge ou être intégré dans la charge, par exemple une valise, elle-même équipée par ailleurs de roues pour rouler sur une surface plane, régulière.

Suivant une autre caractéristique avantageuse,la chenille est entraînée en circulation dans le sens montant/descendant (moteur/frein moteur) par un moyen d'entraînement au moteur électrique commandé. L'entraînement électrique est commandé pour ne fonctionner qu'au passage des marches.

Suivant une caractéristique avantageuse, la commande est faite par un capteur de contact qui détecte le contact du brin avant avec un nez de marche déclenchant ainsi le mouvement de la chenille.

Suivant une autre caractéristique, la chenille est soutenue par une plaque d'appui.

Suivant une autre caractéristique, le module de la chenille est muni d'un traineau coulissant dans un rail porté par le châssis contre l'action d'un ressort de rappel entre une position active basse et une position de repos, remontée.

Suivant une autre caractéristique, le module est relié au châssis par une articulation permettant d'incliner le module et la chenille par rapport au châssis et maintenir cette position inclinée pour le passage des marches.

Suivant une caractéristique particulièrement avantageuse, les roues sont montées de manière escamotable par rapport à la chenille du module élévateur pour qu'en position escamotée, le chariot s'appuie sur le sol ou le dessus de la marche par la partie de la chenille passant sur le cylindre inférieur de sorte que le chariot s'appuie en définitive sur le cylindre inférieur qui roule sur la surface correspondante (sol ou dessus de marche ou nez de marche) à l'intérieur de la chenille appliquée ainsi sur la surface. Selon cette caractéristique, on évite toute discontinuité de mouvement au passage d'une marche de sorte que la montée ou la descente d'un escalier se fait d'une manière particulièrement continue et sans que l'utilisateur n'ait à fournir des efforts répétés comme lorsque les roues rencontrent le nez d'une marche.

En d'autres termes, selon l'invention, il n'y a aucune discontinuité puisque la chenille est toujours en appui, soit par son bras avant lorsque le module élévateur passe sur le nez d'une marche, soit par la partie inférieure du module autour du cylindre inférieur, à la fin du passage sur le nez de la marche ou lorsque le module circule sur le dessus de la marche, les roues étant rétractées.

De façon particulièrement avantageuse, les roues sont escamotables par rapport à la chenille entre une position escamotée pour dégager la zone inférieure de la chenille autour du cylindre inférieur du module élévateur et une position active dans laquelle les roues s'appuient sur le sol ou la surface de roulage, cet escamotage se faisant par le module muni d'un traîneau coulissant dans un rail contre l'action d'un ressort de rappel entre une position active basse et une position de repos remontée ou encore les roues sont montées sur un coulisseau mobile dans un rail pour être relevées ou abaissées chaque fois le long du rail entre la position active des roues et leur position escamotée ou encore les roues sont portées par un bras pivotant permettant le relevage pour dégager la zone inférieure de la chenille ou leur abaissement pour venir en position active.

Dans ces différentes positions escamotées ou actives, les roues sont de préférence verrouillées pour que la position reste maintenue.

Le verrouillage se fait de manière mécanique, qui se libère facilement par basculement du chariot pour soulager la ou les roues à libérer de la position active ou pour permettre la descente des roues dans sa position active à partir de la position escamotée ou position de repos, pour ne pas avoir à soulever le chariot et la charge qu'il porte mais utiliser simplement le châssis du chariot comme levier de basculement de la charge.

Dans ces différentes variantes, le chariot selon l'invention a l'avantage de faciliter considérablement le transport de charge telle que des valises sur des trajets irréguliers avec passage d'escaliers.

### Dessins

La présente invention sera décrite ci-après de manière plus détaillée à l'aide de modes de réalisation d'un chariot de charge pour piéton permettant de passer des marches, représentés très schématiquement dans les dessins annexés dans lesquels :
- la figure 1 est une vue de côté d'un premier mode de réalisation d'un chariot selon l'invention,
- la figure 2 montre dans ses parties 2A, 2B, 2C trois étapes caractéristiques du passage du chariot sur un nez de marche,
- la figure 3 est une vue de côté schématique à échelle agrandie et partielle d'unchariot selon un autre mode de réalisation,
- la figure 4 montre à échelle agrandie et de manière plus détaillée un autre mode de réalisation d'un chariot selon l'invention,
- la figure 5, dans ses parties 5A, 5B, montre une vue de côté très schématique le mode de réalisation duchariot de la figure 4, présenté :
   * à la figure 5A, dans sa position de repos,
   * à la figure 5B, dans sa position active mais non inclinée,
- la figure 6 montre dans ses parties 6A-6C trois phases de passage d'un nez de marche avec un chariot à entraînement commandé selon l'invention,
- la figure 7A est une vue schématique d'un autre mode de réalisation du chariot selon l'invention, en position de repos,
- la figure 7B est une vue du chariot de la figure 7A, préparé pour passer des marches,
- les figures 8A et 8B montrent un exemple de réalisation d'un dispositif d'escamotage de la roue du chariot selon l'invention respectivement en position déployée et en position rétractée, et
- les figures 9A et 9B montrent un autre exemple de réalisation du dispositif d'escamotage de la roue du chariot selon l'invention respectivement en position déployée et en position rétractée.

### Description demodes de réalisation de l'invention

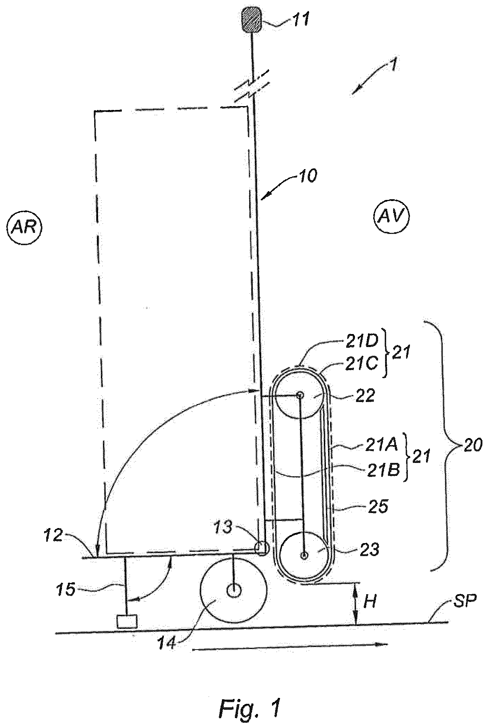

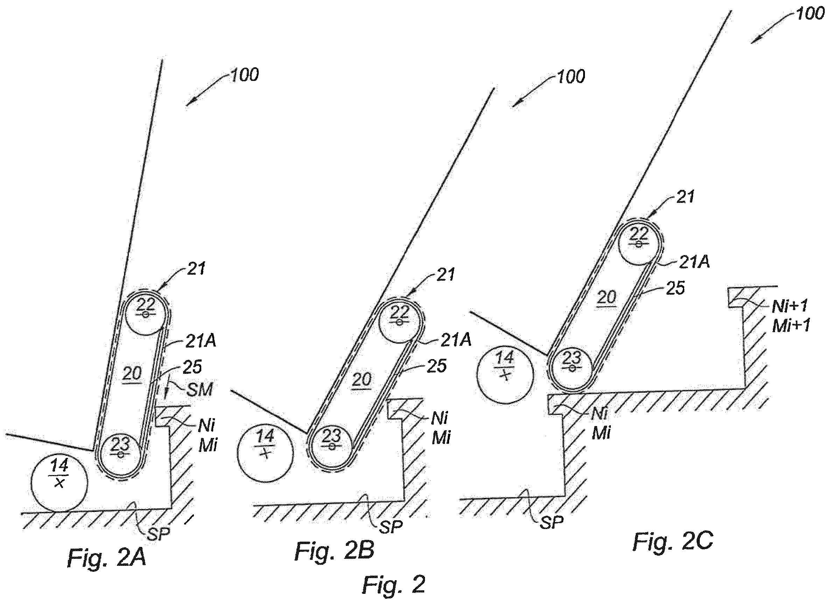

Selon les figures 1 et 2A-C, un premier mode de réalisation d'un chariot100 pour recevoir une charge V telle qu'une valise et être tiré en position dressée par un piétonsur une surface plane SP, horizontale ou inclinée, ainsi que pour passer des marches Mi, se compose d'un châssis 10 debout,terminé en partie haute par une poignée 11 et en partie basse par un plateau 12 de réception de charge. Le plateau 12 est relié au châssis 10 par une articulation 13 pour être replié en position de rangement. Le dessous du châssis est équipé d'une paire de roues 14. Ces roues sont reliées au châssis ou au plateau et elles sont escamotables si le plateau 12 lui-même est escamotable. Ce châssis 10 reçoit la charge Vtelle qu'une valise figurée par un rectangle. L'équerre du châssis formée avec le plateau 12 est ouverte vers l'arrière AR selon le sens de la marche lorsque le piéton placé devant (AV) tire le chariot 100.

La charge V est par ailleurs sanglée au châssis avec des liens élastiques ou des sangles non représentés. Le support en forme de plateau 12 peut être relevé contre le châssis 10 pour réduire l'encombrement du chariot pour son rangement. Le châssis 10 est constitué par une paire de tubes télescopiques qui peuvent se rétracter en position de rangement ou s'étirer pour que la poignée 11 soit à une hauteur pratique pour la traction. L'ensemble se bloque dans la position de rangement et dans la position déployée par des moyens de blocage non détaillés.

Dans la version représentée, le plateau 12 est muni de la paire de roues 14 pour circuler sur une surface lisse SP lorsque le châssis est tiré. Le plateau 12 comporte également un pied rabattable 15 permettant de le tenir en position de repos, debout, comme celle représentée.

Il suffit d'incliner légèrement le chariot vers l'avant pour que la béquille 15 se soulève du sol et que seule la paire de roues 14 touche le sol. La béquille est elle aussi rabattable pour le rangement.

A l'avant, le châssis 10 est équipé d'unmodule élévateur 20 situé en partie basse du châssis, devant la paire de roues 14 et à une certaine hauteur du sol pour ne pas le toucher lorsque le châssis est incliné pour être tiré sur une surface plane SP.

Le module 20se compose d'une bande sans fin ou chenille 21 passant sur un cylindre supérieur 22 et un cylindre inférieur 23 en étant tendue.

Le brin avant 21A de la chenille est soutenu par une plaque d'appui 25 de façon que lorsque le brin avant 21A est appuyé contre un nezde marcheNi, il ne s'enfonce pas et trouve la résistance par la plaque d'appui 25 permettant le mouvement de la circulation relative par rapport à la chenille (la chenille 21 reste immobile et la plaque d'appui 25 glisse).

La bande sans fin de la chenille 21 a une surface extérieure schématisée par un trait continu 21C doublé par un trait interrompu 21D qui figure sa rugosité ou son éventuel relief, par exemple un relief cannelé, pour s'accrocher au nez Ni des marches Mi comme cela sera vu ensuite.

Le dessous du cylindre inférieur 23 de la chenille 21est à une certaine hauteur H, au-dessus de la surface du sol, lorsque le chariot est en position verticale ou position de repos oud'attente comme celle représentée à la figure 1.

Le fonctionnement du chariot100 selon l'invention, au passage d'une marche Mi ou plus exactement d'un nez de marche Ni, est représenté schématiquement aux figures 2A-2C qui montrent les trois étapes ou phases les plus caractéristiques du passage d'un nez de marche avec le chariot. Dans ces figures, le chariot est schématisé de manière extrême pour faciliter la présentation du mouvement.

Selon la figure 2A, le chariot 100 roule sur la surface plane en amont de la marche Mi. Puis le chariot 100, en position inclinée et de traction comme celle représentée, rencontre le nez Ni de la marche Mi par le brin avant 21A de la chenille 21. La chenille 21 s'accroche au nez Ni de la marche par sa rugosité de sorte qu'il suffit de tirer sur le châssis 10 en l'inclinant légèrement, naturellement, d'une manière plus prononcée que pour rouler sur une surface plane SP de sorte que le brin avant 21A de la chenille reste fixe et les autres parties 22, 23, 25 remontent à l'intérieur de la chenille 21 comme le montre la figure 2B qui correspond à une position intermédiaire. La chenille 21 passe complètement le nez Ni de la marche et se retrouve sur le dessus de la marche Mi comme représenté à la figure 2C. A ce moment, le chariot 100 continue d'être tiré et il roule sur la surface de la marchepar la chenille 21 autour du cylindre inférieur 23aussi longtemps que sa paire de roues 14 n'est pas en contact avec le dessus de la marche. Ensuite, la paire de roues 14 arrive au contact avec la marche Mi et le chariot roule sur ses deux roues 14 jusqu'à ce que le brin avant 21A de la chenille rencontre le nez Ni+1 de la marche suivante Mi+1 et se retrouve dans une position analogue à celle de la figure 2A.

Au cours de ce mouvement de montée de la marche Mi, la chenille 21 est soutenue par la plaque d'appui 25 qui se trouve derrière le brin avant 21A de la chenille. Pendant le mouvement relatif, la plaque d'appui 25 glisse sur la surface intérieure de la bande sans fin 21 de la chenille 20 et les deux cylindres 22, 23 en extrémité tournent à l'intérieur de cette bande. En résumé, lemodule 20 permet d'absorber en douceur le passage d'un nez Ni de marche sans que le piéton n'ait à fournir un effort tout particulier ou d'exécuter un mouvement particulier à cause de l'accrochage plus ou moins important de la paire de roues 14 au nez Ni des marches et de l'effort qu'il faut faire pour manœuvrer et basculer le chariot 100 avec cet appui de la paire de roues.

La figure 3 montre en vue à échelle agrandie, un autre mode de réalisation d'un chariot 100 selon l'invention dont lemodule 120 est motorisé. Outre les éléments déjà décrits dans le cas du chariot de la figure 1, il comporte un entraînement motorisé 130. Pour simplifier la présentation de cette variante de chariot 100, les éléments communs avec le mode de réalisation de la figure 1 portent les mêmes références précédées du chiffre 1. Ces éléments ne seront redécrits ci-après que dans la mesure où cela est nécessaire pour la compréhension de cette variante.

Le cylindre supérieur 122 est de préférence le cylindre moteuréquipé d'un moteur électrique 131 et le cylindre inférieur 123 est un cylindre tournant librement autour de son axe. Entre les deux cylindres 122, 123 et à l'intérieur de la chenille 121, le module 120 comporte un accumulateur électrique 132, de préférence un accumulateur de type lithium-ion, un circuit de commande 133 pour commander l'alimentation du moteur 131 équipant le cylindre moteur 122 selon le sens de rotation approprié. Le circuit de commande 133 est relié à un détecteur d'appui 134 qui commande la mise en route du moteur et son sens de rotation. La mise en marche/arrêt peut également se faire par un interrupteur 35 équipant le châssis 110.

Le fonctionnement de ce chariot 100 correspond au fonctionnement général décrit à l'aide des figures 2A-2C. Selon une version, l'entraînement de la chenille 121 est commandé par le bouton 135 manœuvré par l'utilisateur équipant par exemple la poignée. Selon une autre forme de réalisation, l'entraînement 130 est activé par le contact de la chenille 121 avec le nez Ni d'une marche puis l'entraînement reste activé pendant un certain temps pour passer la marche Mi. Ainsi et de façon analogue à ce qui est représenté à la figure 2A, au début de la phase de passage d'une marche Mi, le chariot 100, légèrement incliné, rencontre le nez de la marche. Ce contact est détecté par le détecteur d'appui 134 qui envoie un signal correspondant au circuit de commande 133. Ce dernier active le moteur 131 dans le sens de la marche montante. Ce sens de rotation de la bande 121 qui est le sens descendant du brin avant 121A est indiqué par la flèche SM à la figure 2A.

Lorsque l'appui du brin avant 121A de la chenille 121 est suffisamment appuyé, sous l'effet du basculement du chariot avec sa charge, le brin avant 121A s'accroche au nez Ni de la marche Mi et le cylindre moteur 122 fait alors tourner la bande 121 de façon que les cylindres 122, 123 avec le chariot et le châssis 110 avec la charge montent, comme le montre la figure 2B. Arrivée au-dessus du nez de la marche Ni, la chenille 120 peut continuer de tourner de sorte que le châssis 110 avec la charge roule sur le dessus de la marche et arrive ensuite dans la position représentée à la figure 2A mais pour la marche Mi suivante située au-dessus.

Pour passer les marches dans le sens montant, le piéton marche du côté avant par rapport au chariot100 et il actionne le châssis pour le basculer ou l'incliner plus fortement qu'en position de circulation normale sur une surface plane, contre le nez de chaque marche.

Pour descendre les marches, le chariot se trouve de préférence devant le piéton et le sens de rotation du moteur 131 et celui du cylindre moteur 122A de la chenille 120 sont inversés. Le moteur 131 peut également fonctionner comme frein moteur pour que la descente du chariot 110, au passage d'un nez de marche Ni, se fasse en douceur et non pas brutalement.

Suivant une variante, la chenille 120 est en roue libre pour ce sens de fonctionnement, le passage des marches Mi étant facilité et régularisé par l'appui du brin avant 121A (qui est maintenant à l'arrière dans le sens de la marche) contre le nez Ni de la marche dans le sens de la descente. Cela est également vrai pour le chariot 10 non motorisé de la figure 1.

La figure 4 et la figure 5, dans ses parties 5A, 5B, montrent un autre mode de réalisation dechariot 200 selon l'invention. Pour simplifier la présentation de cette variante, les éléments repris du premier mode de réalisation portent les mêmes références précédées du chiffre 2 et les éléments du second mode de réalisation selon la figure 3 portent les mêmes références dans lesquelles le suffixe 1 sera remplacé par le suffixe 2. Ce mode de réalisation 200 reprend les éléments essentiels du second mode de réalisation 100 sauf que lemodule élévateur 220 comporte un traineau 250 monté coulissant dans un rail montant 251, porté par le châssis 210. Le traineau 250 du module 220 est maintenu en position haute (figure 5A) par rapport au rail 251 par un ressort 252 qui compense le poids du chariot. Le chariot 200 est en position active représentée à la figure 5B. Dans cette position, il est abaissé dans les conditions vues ensuite, avec compression du ressort de rappel 252.

En effet, et comme le montrent les figures 6A, 6B, 6C, lorsque le brin avant 221A de la chenille 221 touche le nez Ni de la marche, ce contact déclenche la mise en route du moteur 231 du cylindre moteur 222 de la chenille 221. Mais à ce moment, le contact n'est pas suffisant pour accrocher la chenille de sorte que le léger frottement de la chenille 221 contre le nez Ni de la marche produit par réaction la descente du traineau 250 avec compression du ressort de rappel 252 de sorte que l'on arrive dans la position de la figure 6B. Dans cette position, le chariot 200 est supposé être suffisamment incliné pour que la chenille 221s'accroche au nez Ni de la marche et par réaction, soulève le châssis 210 avec sa charge. On arrive ensuite au passage du nez Ni de la marche dans la position représentée à la figure 6C. Dans cette position, la chenille 221 continue de rouler sur le dessus de la marche Mi jusqu'à rencontrer de nouveau le nez Ni+1 de la marche suivante Mi+1 et se retrouver dans les conditions présentées à la figure 6A.

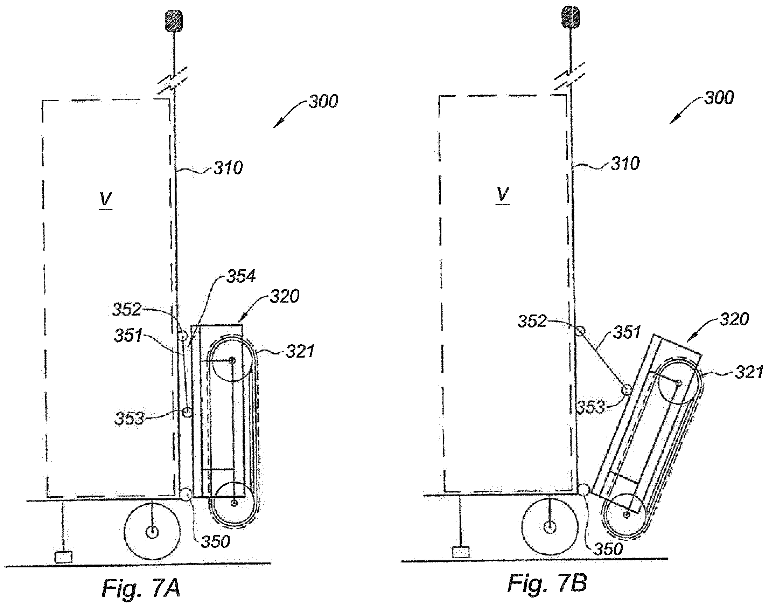

Selon les figures 7A, 7B, un autre mode de réalisation de l'invention d'un chariot 300 comporte les mêmes éléments principaux que le chariot non motorisé de la figure 1 ou le chariot 100 motorisé de la figure 3. Ce chariot 300 a un châssis 310 muni de roues 314 pour rouler sur une surface plane sans marches.

Le chariot comporte un module 320 logeant la chenille 321, que cette chenille soit motorisée ou non. Le module 320 est relié à son extrémité inférieure par une articulation 350 à la base du châssis 310 et en partie supérieure, par un bras 351 articulé par une articulation 352 au châssis 310 et par une articulation coulissante 353 au module 320. Le point d'articulation 353 coulisse par rapport au dos du module 320, par exemple dans un rail 354, de façon à permettre le pivotement du module 320 par rapport au châssis 310 et passer de la position repliée représentée à la figure 7A dans la position pivotée représentée à la figure 7B.

La position de la figure 7A est la position de circulation du chariot sur une surface plane horizontaleou sur des marches comme les chariots déjà décrits alors que la position pivotée de la figure 7A permet au chariot de passer plus facilement des marches grâce à l'inclinaison plus accentuée de la chenille 321 lorsque le module 320 est pivoté par rapport au châssis 310. Le module 320 est avantageusement bloqué, tant dans la position de repos (figure 7A) que dans la position pivotée de la figure 7B.

Dans chacune des positions, le module 320 est tenu par un simple verrouillage qui se libère à la main. Ce verrouillage n'est pas représenté.

Suivant un autre mode de réalisation non représenté, la bande sans fin de la chenille 121, 221, 321 n'est pas continue sur toute la largeur de la chenille mais est constituée par exemple par deux bandes synchrones, placées de part et d'autre et notamment près des côtés du montant du châssis 310.

Le chariot selon l'invention peut également se réaliser comme un équipement qui se fixe à un bagage ou qui est directement solidaire du bagage et dans ce cas, l'équipement ne comporte pas de plateau 12, 112, 212, 312 mais se combine aux roulettes intégrées dans la charge ou bagage V.

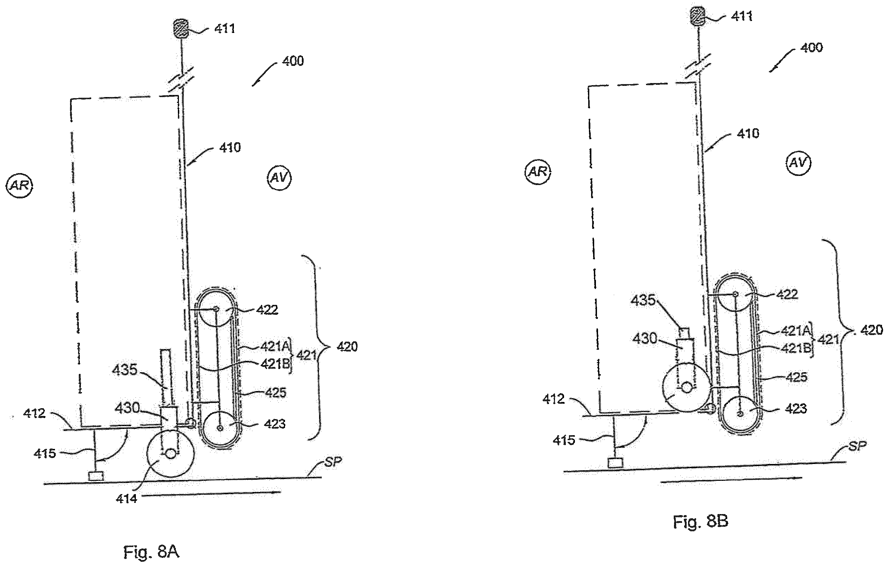

Les figures 8A et 8B montrent un exemple de réalisation de chariot 400 selon l'inventioncomportant les mêmes éléments que ceux des modes de réalisation décrits ci-dessus portant les mêmes références précédées du chiffre 4. Ces éléments communs ne seront pas systématiquement redécrits.

Ainsi le chariot 400 se compose d'un châssis 410 muni d'une poignée 411 et d'un plateau 412 équipé de roues 414 et d'un module élévateur 420, de préférence motorisé. Le module 420 se compose d'un cylindre supérieur 422 et d'un cylindre inférieur 423 sur lesquels passe la chenille 421. L'un des deux cylindres ou les deux cylindres sont motorisés et intègrent de préférence le moteur électrique non représenté assurant leur entraînement.

Les roues 414 du chariot 400 sont escamotables pour le passage des marches, entre une position active et une position escamotée, cette dernière permettant au chariot de rouler sur les roues. La position active et de préférence aussi la position escamotée sont bloquées en fin de course d'une manière qui peut être débloquée par une commande, de préférence mécanique.

Chaque roue 414 du chariot 400 est montée sur un coulisseau 430 mobile dans un rail 435. La figure 8A montre les roues 414 dans la position usuelle d'utilisation du chariot 400. Ces figures en vue de côté ne montrent qu'une roue, l'autre roue étant équipée d'un dispositif identique. La flèche indique le sens de déplacement du chariot 400. La chenille 421 du module élévateur 420 se trouve devant la roue 414 en mode de déplacement usuel de sorte que les roues414 se trouvent en retrait vis-à-vis de la chenille 21et en dessous de celui-ci pour rouler sur le sol. La roue 414 est reliée à un coulisseau 430 mobile dans un rail 435 montant. Le coulisseau 430 portant la roue 414 est maintenu en position abaissée par un dispositif de blocage non détaillé. Dans cette position, le chariot 400 circule alors uniquement sur ses roues414, la chenille 421 n'ayant pas contact avec le sol (SP).

La figure 8B montre les roues414 en position rétractée qui dégage la partie inférieure de la chenille 421. Le chariot 400 est représenté abaissé, s'appuyant uniquement sur le sol (SP) par la zone de la chenille 421 sous le cylindre inférieur 423. Cet état du chariot 400 est celui de l'étape qui précède le passage de la première marche. Le chariot 400 roule sur le sol par son module 420 jusqu'à ce que le brin avant 421A de la chenille 421 arrive contre le nez de la marche. Dans cette position des roues 414, la partie inférieure de la chenille 21 peut venir sur le nez de la marche et sur la partie horizontale de la marche. Seule la chenille 421 est alors en contact avec le nez ou la marche, ce qui évite tout à-coup au moment de la montée des marches ;ainsi la chenille motorisée entraîne le chariot, de manière continue tout au long de la montée des marches, y compris au moment du passage du nez des marches et sur les surfaces horizontales des marches. L'utilisateur ne subit pas d'àcoups dans la tenue du chariot et n'a pas à fournir d'effort pour faire passer les roues sur le nez de la marche ou pour dégager le nez de l'intervalle entre la roue et la chenille comme cela serait le cas, par exemple si l'on maintenait les roues 414 dans la position abaissée, active, de la figure 8A. Selon une autre variante d'utilisation du chariot 400, on peut attaquer la première marche et n'escamoter les roues 414 que lorsque la chenille 421 est appuyée sur le dessus du nez de la marche et qu'ainsi les roues 414 ne sont plus en appui sur le sol.

L'escamotage des roues 414 et ainsi le soulèvement de la chenille 421 autour du cylindre inférieur 423 permet d'avoir un plus grand dégagement sous le module élévateur 420 lorsque le chariot 400 circule sur ses roues 414 évitant que le module 420, non nécessairement activé, gêne le passage de petits obstacles non assimilables à des marches ou qu'il est plus avantageux de passer en utilisant les roues 414.Pour passer de la position déployée à la position escamotée de la figure 8B, il suffit de libérer le dispositif de verrouillage du coulisseau 430. Celui-ci coulisse alors dans le rail 435 jusqu'à sa position haute représentée à la figure 8B, le dispositif de verrouillage permettant alors de verrouiller le coulisseau 430 dans sa position haute. Il est également possible de prévoir deux dispositifs de verrouillage. Un premier dispositif de verrouillage maintenant les roues414 en position active et le second en position rétractée. Pour faciliter le passage de la position abaissée à la position rétractée et inversement, on peut appuyer le chariot 400 sur son pied 415pour soulager les roues du poids du chariot 400 au cours de la phase d'escamotage des roues 414. En basculant le chariot 400 vers l'arrière, les roues 414 ne sont plus en appui sur le sol etcela tant pour faciliter la montée des roues 414 en position escamotée avec leur coulisseau 430 que pour les faire descendre en position active. Les roues 414 peuvent avoir des coulisseaux 430 indépendants ou jumelés. Dans le cas de coulisseaux indépendants, chaque coulisseau se commande séparément. Dans le cas de coulisseaux jumelés, les deux se commandent à l'aide d'une commande unique.

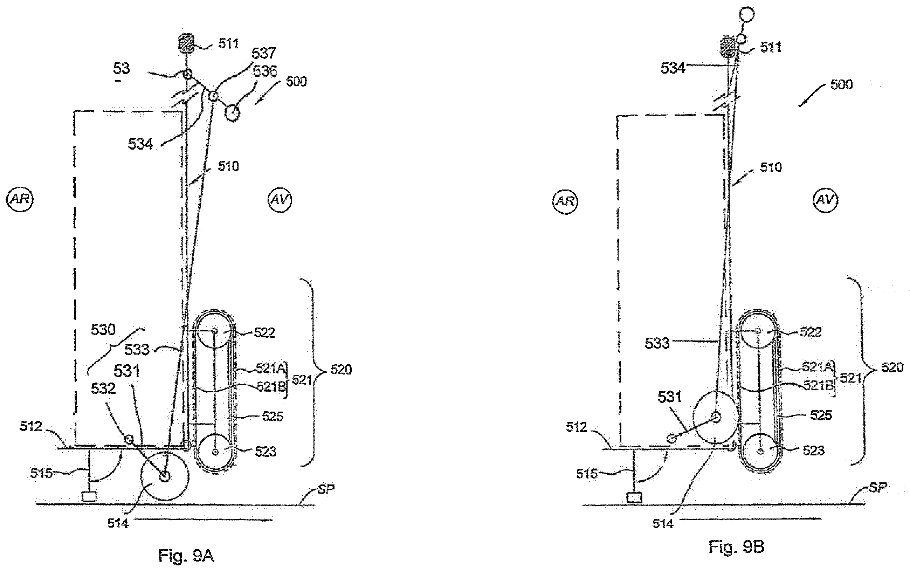

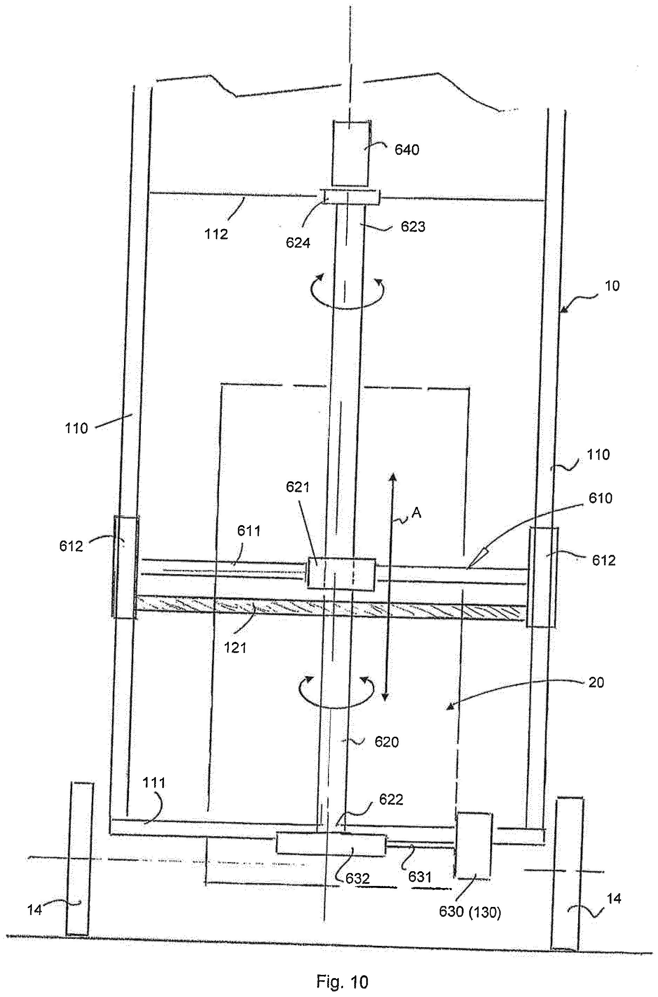

Les figures 9A et 9B montrent un autre exemple de réalisation d'un chariot 500 avec un dispositif d'escamotage des roues selon l'invention. Dans ce cas, comme précédemment, les éléments du chariot 500 analogues ou identiques à ceux du mode de réalisation de la figure 1 portent les mêmes références précédées du chiffre 5 et leur description détaillée ne sera pas nécessairement reprise. Le chariot 500 comporte un châssis 510 équipé de deux roues 514 et d'un module élévateur 520. Le module élévateur 520 comporte un cylindre supérieur 522 et un cylindre inférieur 523 sur lesquels passe la chenille 521. Le ou les cylindres sont de préférence moteurs, entraînés par un moteur électrique intégré.

Chaque roue 514 est portée par un mécanisme 530 composé d'un levier ou bras 531 dont une extrémité est articulée à l'axe 532 du châssis 510 et l'autre porte la roue 514. Le mécanisme 530 comporte une tringle 533 reliée à un levier de manœuvre 534 en partie haute du châssis 510, de préférence près de la poignée 511 du châssis 510 pour faciliter la manœuvre. Ce levier de manœuvre 534 est articulé par une extrémité 535 au châssis 510 et son autre extrémité comporte une poignée 536. L'extrémité supérieure de la tringle 533 est reliée par une articulation 537 au levier 534.

Le mécanisme 530 comporte un moyen de verrouillage non détaillé pour bloquer la roue 514 en position abaissée (position active) et en position relevée (position escamotée). Le verrouillage / déverrouillage du mécanisme 530 dans l'une ou l'autre position se fait comme dans l'exemple précédent, après le passage du premier nez de marche, lorsque le module 520 (et le chariot 500) est appui par la chenille 521 sur le rouleau inférieur 525 et que les roues 514 ne sont plus en appui sur le sol ou encore avant d'aborder la première marche.

A l'arrivée en haut des marches, la mise en position active des roues 514 se fait de préférence par le basculement du chariot500 vers l'arrière pour l'appuyer sur le pied 515 ou l'extrémité du plateau 512 et ensuite après avoir abaissé les roues 514, par un basculement inverse, on rétablit le chariot dans sa position de roulage.

Dans cette variante, les mécanismes 530 des deux roues 514 sont indépendants ou de préférence jumelés pour être actionnés par une seule manœuvre pour les deux côtés.

La figure 9A montre le chariot 500 avec ses roues514 en position active en contact avec le sol. Le chariot 500 se déplace selon la direction de déplacement indiquée par la flèche.

La figure 9B montre les roues514 escamotées. Pour passer de la position représentée à la figure 9A à celle de la position représentée à la position 9B, on libère le dispositif de verrouillage non représenté du mécanisme 530, maintenant les roues 14 en position active.

Le chariot (1, 100-500) selon l'invention s'utilise avantageusement comme chariot pour transporter une valise, comme chariot de marché pour faire les courses ou encore comme diable, en particulier dans sa version motorisée. Les différents chariots (1, 100-500) décrits ci-dessus peuvent être motorisés avec un moteur intégré dans un ou dans les deux cylindres du module élévateur avec une alimentation par batterie, notamment une batterie lithium-ion.

### NOMENCLATURE DES ELEMENTS PRINCIPAUX

(Seules les premières références des éléments communs aux différents modes de réalisation se trouvent dans la nomenclature ci-dessouset le cas échéant dans les revendications pour ne pas en compliquer la lecture)
- 1, 100, 200, 300, 400, 500: Chariot
- 10: Châssis
- 11: Poignée
- 12: Plateau
- 13: Articulation
- 14: Roue
- 15: Pied rabattable
- 20: Module élévateur
- 21: Chenille
21A Brin avant
21B Brin arrière
21C Surface extérieure
21D Rugosité de la chenille
- 22: Cylindre supérieur
- 23: Cylindre inférieur
- 24: Plaque d'appui
- 130: Entraînement motorisé
- 131: Moteur électrique
- 132: Accumulateur
- 133: Circuit de commande
- 134: Détecteur d'appui
- 135: Interrupteur
- 250: Traineau
- 251: Rail
- 252: Ressort
- 320: Module
- 350: Articulation
- 351: Bras / bielle
- 352: Articulation
- 353: Articulation / articulation coulissante
- 430: Coulisseau
- 435: Rail
- 530: Mécanisme
- 531: Levier/bras
- 532: Axe du levier 531
- 533: Tringle
- 534: Levier de manœuvre
- 535: Extrémité du levier 534
- 536: Poignée
- 537: Articulation

- Mi: Marche
- Ni: Nez de marche
- SP: Surface plane
- V: Valise / charge

## Revendications

1. Chariot pour recevoir une charge et être tiré en position dressée, par un piéton pour notamment passer des marches, comprenant :
- un châssis debout (10), terminé en partie haute par une poignée (11) et en partie basse, un plateau (12) recevant la charge (V) pour rouler sur une surface plane (SP),
- le dessous du châssis (10) est équipé d'une paire de roues (14)
- au dos le châssis (10), comporte en partie basse, un module élévateur (20) comprenant une chenille (21) avec un brin avant (21A) passant sur un cylindre supérieur (22) et un cylindre inférieur (23), et une plaque d'appui (25) derrière le brin avant (21A) de la chenille (21) ayant une surface extérieure non lisse pour s'accrocher à un nez de marche (Ni) et déplacer par réaction, le châssis (10) avec sa charge pour passer le nez de marche,
- le module élévateur (20) est installé en partie basse du châssis (10), devant la paire de roues (14) et pour que
* le châssis (10) incliné et tiré sur une surface plane (SP), ne touche pas le sol,
* en roulant, le brin avant (21A) soutenu par la plaque d'appui (25) rencontre le nez de marche et la plaque d'appui (25) glisse sur la surface intérieure de la chenille (21),
* la chenille (21) passe complètement le nez (Ni) de la marche, arrive sur le dessus de la marche (Mi) et avance sur la surface de la marche en appui sur le cylindre inférieur (23) aussi longtemps que sa paire de roues (14) n'est pas en contact avec le nez ou le dessus de la marche.

2. Chariot selon la revendication 1,
**caractérisé en ce que**
la chenille (21,121) est entraînée en circulation dans le sens montant/descendant en moteur/frein moteur par un moyen d'entraînement (130) à moteur électrique (131) commandé.

3. Chariot selon la revendication 2,
**caractérisé par**
une commande (134, 135) pour activer le moyen d'entraînement (130) de la chenille (121) au moins à l'arrivée contre le nez de marche (Ni) et pendant le contact du brin avant (121A) de la chenille avec le nez de marche et notamment la commande (133) comporte un détecteur d'appui (133) détectant le contact du brin avant (121A) de la chenille (121) avec un obstacle tel qu'un nez de marche (Ni).

4. Chariot selon la revendication 1,
caractériséen ce que
le module (220) est muni d'un traineau (250) coulissant dans un rail (251) contre l'action d'un ressort de rappel (252) entre une position active basse et une position de repos, remontée.

5. Chariot selon la revendication 1,
**caractérisé en ce que**
les roues (14) sont montées de manière escamotable par rapport à la chenille (21) du module élévateur (20) pour qu'en position escamotée, le chariot (1) s'appuie sur le sol ou le dessus de la marche par la partie de la chenille (21) passant sur le cylindre inférieur (23) du module (20).

6. Chariot selon la revendication 5,
**caractérisé en ce que**
les roues (14) sont réglables entre une position active et une position escamotée pour dégager la zone inférieure de la chenille (21) autour du cylindre inférieur (23) **en ce que**
- le module (220) est muni d'un traîneau (250) coulissant dans un rail (251) contre l'action d'un ressort de rappel (252) entre une position active basse et une position escamotée, remontée, ou
- les roues (414) sont montées sur un coulisseau (430) mobile dans un rail (435) pour être relevées ou abaissées le long du rail (435) ou
- les roues (514) sont portées par un bras pivotant, permettant leur relevage pour dégager la zone inférieure de la chenille (21).

## Patentansprüche

1. Wagen zum Aufnehmen einer Last und zum aufrechten Ziehen durch eine gehende Person, insbesondere zum Überwinden von Treppenstufen, umfassend:
- ein aufrechtstehendes Fahrgestell (10), das im oberen Bereich mit einem Griff (11) und im unteren Bereich mit einer die Last (V) aufnehmenden Platte (12) zum Rollen auf einer ebenen Fläche (SP) abgeschlossen ist,
- die Unterseite des Fahrgestells (10) mit einem Radpaar (14) ausgestattet ist
- das Fahrgestell (10) auf seiner Rückseite im unteren Bereich ein Hebemodul (20) aufweist, das eine Raupe (21) umfasst, deren vorderer Strang (21A) über eine obere Walze (22) und eine untere Walze (23) läuft, sowie eine Stützplatte (25) hinter dem vorderen Strang (21A) der Raupe (21), die eine nicht glatte Außenfläche aufweist, um sich an einer Treppenkante (Ni) festzuhalten und durch Reaktionskraft das Fahrgestell (10) mit seiner Last über die Kante zu bewegen,
- wobei das Hebemodul (20) im unteren Bereich des Fahrgestells (10) vor dem Radpaar (14) angeordnet ist, und sodass
* das auf eine ebene Fläche (SP) gezogene und geneigte Fahrgestell (10) den Boden beim Rollen nicht berührt,
* der von der Stützplatte (25) abgestützte vordere Strang (21A) die Treppenkante trifft und die Stützplatte (25) auf der Innenfläche der Raupe (21) gleitet,
* die Raupe (21) sich vollständig über die Kante (Ni) der Treppenstufe bewegt, auf die Stufenoberseite (Mi) gelangt und sich auf der Stufenoberfläche in Anlage an der unteren Walze (23) bewegt, solange ihr Radpaar (14) die Stufenkante oder - oberseite nicht berührt.

2. Wagen nach Anspruch 1,
**dadurch gekennzeichnet, dass**
die Raupe (21, 121) durch ein Antriebsmittel (130) mit gesteuertem Elektromotor (131) im Aufwärts- bzw. Abwärtslauf als Motor bzw. Motorbremse in Umlauf versetzt wird.

3. Wagen nach Anspruch 2,
**gekennzeichnet durch**
eine Steuerung (134, 135) zum Aktivieren des Antriebsmittels (130) der Raupe (121) zumindest bei Ankunft gegen die Treppenkante (Ni) und während des Kontakts des vorderen Strangs (121A) der Raupe mit der Treppenkante, wobei insbesondere die Steuerung (133) einen Stützsensor (133) aufweist, der den Kontakt des vorderen Strangs (121A) der Raupe (121) mit einem Hindernis wie einer Treppenkante (Ni) erfasst.

4. Wagen nach Anspruch 1,
**dadurch gekennzeichnet, dass**
das Modul (220) mit einem Schlitten (250) versehen ist, der in einer Schiene (251) gegen die Wirkung einer Rückstellfeder (252) zwischen einer niedrigen aktiven Stellung und einer aufgerichteten Ruhestellung verschiebbar ist.

5. Wagen nach Anspruch 1,
**dadurch gekennzeichnet, dass**
die Räder (14) gegenüber der Raupe (21) des Hebemoduls (20) einziehbar gelagert sind, sodass sich der Wagen (1) in eingezogener Stellung mit dem über die untere Walze (23) des Moduls (20) laufenden Teil der Raupe (21) am Boden oder an der Stufenoberseite abstützt.

6. Wagen nach Anspruch 5,
**dadurch gekennzeichnet, dass**
die Räder (14) zwischen einer aktiven und einer eingezogenen Stellung verstellbar sind, um den unteren Bereich der Raupe (21) um die untere Walze (23) freizugeben, indem
- das Modul (220) mit einem Schlitten (250) versehen ist, der in einer Schiene (251) gegen die Wirkung einer Rückstellfeder (252) zwischen einer niedrigen aktiven Stellung und einer aufgerichteten eingezogenen Stellung verschiebbar ist, oder
- die Räder (414) auf einem Schieber (430) gelagert sind, der in einer Schiene (435) bewegbar ist, um entlang der Schiene (435) angehoben oder abgesenkt zu werden, oder
- die Räder (514) von einem Schwenkarm getragen sind, sodass sie zum Freigeben des unteren Bereichs der Raupe (21) angehoben werden können.

## Claims

1. Trolley for receiving a load and being pulled in an upright position by a pedestrian, in particular in order to pass steps, comprising:
- a standing frame (10) which is terminated in the upper portion by a handle (11) and in the lower portion, a plate (12) which receives the load (V) in order to travel on a planar surface (SP),
- the bottom of the frame (10) is provided with a pair of wheels (14),
- at the back, the frame (10) comprises, in the lower portion, a lifting module (20) which comprises a track (21) having a front strand (21A) which passes over an upper cylinder (22) and a lower cylinder (23), and an abutment plate (25) behind the front strand (21A) of the track (21) having a non-smooth outer surface in order to be attached to a stair nosing (Ni) and to move by means of reaction the frame (10) with the load thereof in order to pass the stair nosing,
- the lifting module (20) is installed in the lower portion of the frame (10), in front of the pair of wheels (14) and so that
* the frame (10) which is inclined and pulled on a planar surface (SP) does not touch the ground,
* during travel, the front strand (21A) which is supported by the abutment plate (25) meets the stair nosing and the abutment plate (25) slides on the inner surface of the track (21),
* the track (21) passes the stair nosing (Ni) completely, arrives at the top of the step (Mi) and moves forwards over the surface of the step in abutment against the lower cylinder (23) for as long as its pair of wheels (14) is not in contact with the stair nosing or the top of the step.

2. Trolley according to claim 1,
**characterised in that**
the track (21, 121) is driven in circulation in an upward/downward direction with the engine/engine brake by a driving means (130) with a controlled electric motor (131).

3. Trolley according to claim 2,
**characterised by** a control unit (134, 135) for activating the drive means (130) of the track (121) at least when arriving against the stair nosing (Ni) and during the contact of the front strand (121A) of the track with the stair nosing and in particular the control unit (133) comprises an abutment detector (133) which detects the contact of the front strand (121A) of the track (121) with an obstacle such as a stair nosing (Ni).

4. Trolley according to claim 1,
**characterised in that**
the module (220) is provided with a sliding member (250) which slides in a rail (251) counter to the action of a return spring (252) between a lower active position and a raised rest position.

5. Trolley according to claim 1,
**characterised in that**
the wheels (14) are mounted in a retractable manner relative to the track (21) of the lifting module (20) so that, in a retracted position, the trolley (1) is supported on the ground or the top of the step by the portion of the track (21) which passes over the lower cylinder (23) of the module (20).

6. Trolley according to claim 5,
**characterised in that**
the wheels (14) can be adjusted between an active position and a retracted position in order to clear the lower zone of the track (21) around the lower cylinder (23) **in that**
- the module (220) is provided with a sliding member (250) which slides in a rail (251) counter to the action of a return spring (252) between a lower active position and a raised retracted position, or
- the wheels (414) are mounted on a slider (430) which can be moved in a rail (435) in order to be raised or lowered along the rail (435) or
- the wheels (514) are carried by a pivoting arm which enables them to be raised in order to clear the lower zone of the track (21).
